# EUROPÄISCHE PATENTSCHRIFT

(11) **EP 2 342 471 B1**
(45) Veröffentlichungstag und Bekanntmachung des Hinweises auf die Patenterteilung: **02.01.2013**
(21) Anmeldenummer: 09778714.7
(22) Anmeldetag: 25.09.2009
(51) Int. Cl.: F16C 11/06

(54) **KUGELZAPFEN EINES KUGELGELENKS**
BALL PIN OF A BALL JOINT
PIVOT À ROTULE D'UNE ARTICULATION À ROTULE

(30) Priorität: 03.10.2008 DE 102008013064
(43) Veröffentlichungstag der Anmeldung: 13.07.2011
(73) Patentinhaber: MacLean-Fogg Component Solutions GmbH, 65835 Liederbach (DE)
(72) Erfinder: GÖRG, Alexander, 65366 Geisenheim (DE)
(74) Vertreter: Gosdin, Michael
(86) Internationale Anmeldenummer: PCT/EP2009/006921
(87) Internationale Veröffentlichungsnummer: WO 2010/037504

(56) Entgegenhaltungen:
- EP-A2- 1 418 348
- EP-A2- 1 418 349
- DE-A1- 10 356 111
- US-A1- 2002 051 678

## Beschreibung

Die Erfindung betrifft einen Kugelgelenk-Kugelzapfen, der einen sich in eine Längsrichtung erstreckenden Zapfengrundkörper aufweist, an dessen einem Ende eine mit einer Durchgangsbohrung versehene Kugel auf einen zylindrischen Trägerabschnitt des Zapfengrundkörpers in Längsrichtung aufgeschoben ist, wobei der Trägerabschnitt mit mindestens einer um den Umfang des Trägerabschnitts umlaufenden Ringnut versehen ist.

Ein Kugelgelenk-Kugelzapfen dieser Art ist in der EP 1 418 349 A2 offenbart. Ähnliche Lösungen zeigen die US 2002/0051678 A1, **die** DE 103 56 111 A1 und die EP 1 418 348 A1.

Kugelgelenke mit Kugelzapfen der genannten Art werden benötigt, um beispielsweise in Fahrzeug-Radaufhängungen zwei Teile, die im Betrieb gewisse Bewegungen ausführen, relativ zueinander festzulegen. Diese Teile werden oft als Koppelstangen, Pendelstützen oder Stabilisatorstreben bezeichnet. Sie sorgen dafür, dass Kräfte und Wege übertragen werden. In Kraftfahrzeugen verbinden sie beispielsweise den Stabilisator an der Vorderachse mit dem Achslenker, wobei Kräfte beim Ein- und Ausfedern des Rades übertragen werden und somit das Fahrverhalten des Fahrzeugs bei Fahrbahnunebenheiten stabilisiert wird.

Die Kugelzapfen werden dabei gemäß einer weit verbreiten Ausführungsform aus einem kaltfließgepressten Rohteil spanend gefertigt, indem die Gelenkkugel gedreht und die weiteren Funktionsflächen spanend bearbeitet werden.

Aus der DE 44 03 584 C2 ist es auch bekannt, den Kugelzapfen gemäß der eingangs genannten Weise aus zwei Teilen zusammenzusetzen. Dort wird auf einen Zapfengrundkörper eine mit einer Durchgangsbohrung versehene Kugel ausgeschoben und diese dann mittels eines Umbördelprozesses axial auf dem Zapfengrundkörper fixiert.

Es hat sich als nachteilig herausgestellt, dass die Fertigung nach dieser Weise relativ hohe Kosten verursacht, was angesichts der hohen benötigten Stückzahlen den Wunsch nach einer kostengünstigeren Fertigung aufkommen lässt. Ferner ist es wünschenswert, eine größere Variantenvielfalt an gattungsgemäßen Kugelzapfen zu fertigen, ohne hierbei hohe Kosten zu verursachen.

Der Erfindung liegt daher die Aufgabe zugrunde, einen Kugelzapfen eines Kugelgelenks der eingangs genannten Art so fortzubilden, dass eine einfachere und kostengünstigere Fertigung möglich ist und gleichzeitig Varianten in einfacher Weise gefertigt werden können. Sehr wichtig ist dabei auch die Forderung, dass der Verbund zwischen dem Trägerabschnitt des Zapfengrundkörpers und der Kugel sehr fest ist und so unter allen in Frage kommenden Betriebszuständen die Funktion des Kugelzapfens garantiert ist.

Die Lösung dieser Aufgabe durch die Erfindung ist dadurch gekennzeichnet, dass der Zapfengrundkörper einen sich radial nach außen erstreckenden Flansch aufweist, an den sich eine zylindrische Sitzfläche mit geringerem Durchmesser als der Außendurchmesser des Flansches anschließt, wobei auf der Sitzfläche ein Ring mit Presspassung sitzt, wobei der Ring zwischen der Kugel und dem Flansch angeordnet ist und wobei zwischen dem Flansch und dem Ring eine um den Umfang des Zapfengrundkörpers herum verlaufende Ringnut ausgebildet ist.

Bevorzugt sind auf dem Trägerabschnitt mehrere axial nebeneinander angeordnete Ringnuten angeordnet. Die Ringnuten sind dabei mit Vorteil durch einen Rollprozess eingebracht.

Die mindestens eine Ringnut weist gemäß einer bevorzugten Ausflihrungsform im Radialschnitt eine dreieckförmige Kontur auf. Der Flankenwinkel der dreieckförmigen Kontur zur Längsrichtung beträgt dabei zumeist zwischen 45° und 75°. Die radiale Tiefe der Ringnut liegt bevorzugt zwischen 0,4 mm und 2,0 mm, insbesondere zwischen 0,7 mm und 1,4 mm. Der axiale Abstand zweier Ringnuten liegt bevorzugt zwischen 1,0 mm und 3,0 mm, insbesondere zwischen 1,25 mm und 2,5 mm.

Der Zapfengrundkörper ist im Zustand, in dem die Kugel auf den Trägerabschnitt aufgeschoben ist, vorzugsweise frei von einer Umbördelung. Es hat sich herausgestellt, dass diese zu kostenaufwändig ist und mit der vorgeschlagenen Ausgestaltung ebenfalls hinreichende Kräfte übertragen werden können.

Der Ring weist dabei bevorzugt im Radialschnitt eine rechteckförmige oder quadratische Form auf.

Der Zapfengrundkörper besteht bevorzugt aus einem kaltfließgepressten Körper. Es hat zumeist an dem von der Kugel entfernten Ende einen zylindrischen Abschnitt, in den ein Gewinde eingearbeitet ist. Das Gewinde ist dabei bevorzugt durch einen Rollprozess eingebracht.

Der Kugelzapfen ist besonders bevorzugt Bestandteil des Kugelgelenks einer Pendelstütze eines Kraftfahrzeugs.

Mit der vorgeschlagenen Ausgestaltung des Kugelzapfens ist es möglich, einen festen Verbund zwischen dem Zapfengrundkörper des Kugelzapfens und der aufgeschobenen Kugel sicherzustellen, wobei die hierfür erforderlichen Maßnahmen kostengünstig umsetzbar sind. Durch die in den Trägerabschnitt des Zapfengrundkörpers eingearbeiteten Ringnuten bzw. durch die sich zwischen denselben befindlichen Spitzen hat die aufgeschobene Kugel einen festen Halt, so dass unter allen in Frage kommenden Betriebszuständen die Funktion des Kugelzapfens garantiert werden kann.

Durch ein Einrollen der Ringnuten in den Trägerabschnitt können diese sehr schnell und kostengünstig gefertigt werden. Vorteilhaft ist der Einrollprozess der Ringnuten auch unter dem Gesichtspunkt, dass sich im Material dann ein günstiger Faserverlauf mit entsprechend hoher Festigkeit der sich zwischen den Ringnuten befindlichen Spitzen ergibt, so dass beim Aufschieben der Kugel keine Späne entstehen, sondern sich die Spitzen zwischen den Ringnuten aufgrund der vorliegenden hohen Flächenpressung in die zylindrische Oberfläche der Durchgangsbohrung in der Kugel eingraben und so für einen festen Verbund sorgen.

Die zum Einsatz kommende Kugel mit Durchgangsbohrung kann in einem separaten Herstellungsprozess gefertigt werden, was den Vorteil hat, dass dieser so optimiert werden kann, dass die Kugel mit hoher Oberflächenqualität kostengünstig produzierbar ist.

Die vorgeschlagene Ausgestaltung ermöglicht auch in einfacher Weise einen modularen Aufbau der Kugelzapfen, so dass es möglich wird, Varianten des Bauteils herzustellen, d. h. verschiedene Zapfengrundkörper können mit verschiedenen Kugeln kombiniert werden.

In der Zeichnung ist ein Ausführungsbeispiel der Erfindung dargestellt. Es zeigen:
- Fig. 1: in der Seitenansicht drei noch nicht montierte Einzelteile, aus denen ein Kugelzapfen eines Kugelgelenks besteht, nämlich einen Zapfengrundkörper, einen Ring und eine Kugel mit Durchgangsbohrung,
- Fig. 2: in der Seitenansicht den montierten Zustand der drei genannten Teile des Kugelzapfens und
- Fig. 3: die Einzelheit "Z" gemäß Fig. 1.

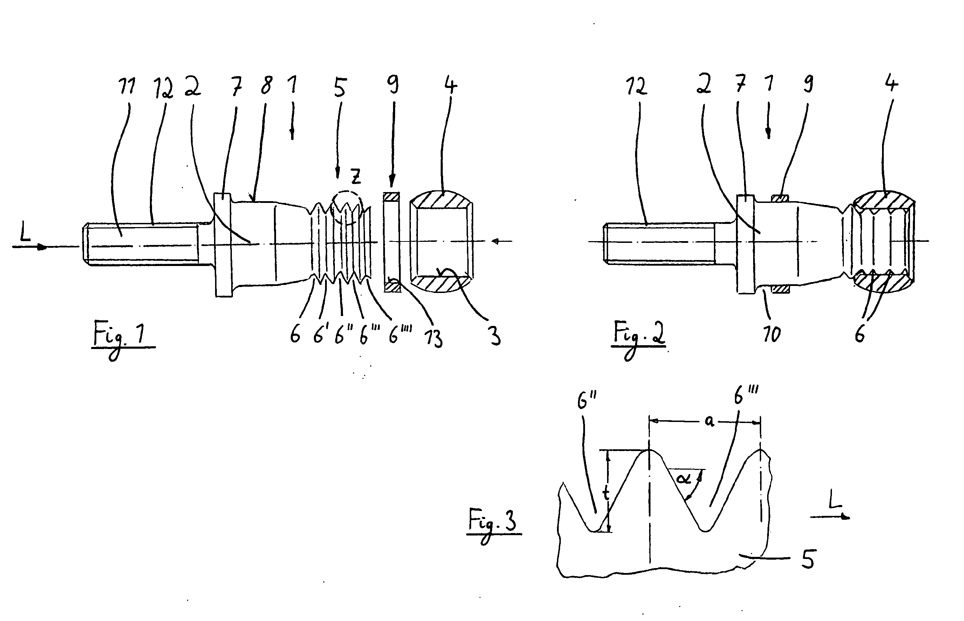

In Fig. 1 und 2 ist ein Kugelzapfen 1 zu sehen, der Bestandteil eines Kugelgelenks ist, dessen weitere Bauteile nicht dargestellt sind, insbesondere nicht eine Kugelschale, die eine Kugel 4 des Kugelzapfens aufnimmt.

Der Kugelzapfen 1 ist vorliegend aus drei Bauteilen zusammengesetzt, die in Fig. 1 separat und in Fig. 2 im zusammengefügten Zustand dargestellt sind. Ein Zapfengrundkörper 2 trägt sowohl einen Ring 9 als auch die Kugel 4, wobei diese beiden Bauteile mit Presspassung auf zylindrischen Abschnitten des Zapfengrundkörpers sitzen.

Wie in Fig. 1 zu sehen ist, hat der Zapfengrundkörper 2 eine zylindrische Sitzfläche 8, die zur Aufnahme des Rings 9 ausgebildet ist. Die Sitzfläche 8 und die Innenbohrung 13 des Rings 9 sind so toleriert, dass der Ring 9 fest, d. h. mit Presspassung auf der Sitzfläche 8 sitzt, wenn er in Längsrichtung L und in Richtung des Pfeils rechts neben der Kugel 4 gemäß Fig. 1 aufgeschoben wird. Der Zapfengrundkörper 2 hat einen Flansch 7 mit einem gegenüber der Sitzfläche 8 vergrößerten Durchmesser. Dieser Durchmesser ist etwa so groß wie der Außendurchmesser des Rings 9. Demgemäß ergibt sich im aufgeschobenen Zustand des Rings 9 eine Ringnut 10 zwischen dem Flansch 7 und dem Ring 9, die benötigt wird, einen nicht dargestellten Dichtungsbalg mit einem ebenfalls nicht dargestellten Sprengring bzw. Federelement zu fixieren.

Die Kugel 4 hat eine Durchgangsbohrung 3, mit der sie auf einen zylindrischen Trägerabschnitt 5 des Zapfengrundkörpers 2 aufgeschoben wird. Das Aufschieben erfolgt wieder in Richtung des Pfeils rechts neben der Kugel 4 in Fig. 1. Damit ein fester Verbund zwischen der Kugel 4 und dem Trägerabschnitt 5 sichergestellt werden kann, weist der Trägerabschnitt 5 mindestens eine, im Ausführungsbeispiel jedoch fünf nebeneinander angeordnete Ringnuten 6, 6', 6", 6'" und 6"" auf. Die Ringnuten bilden zwischen sich Spitzen, die radial nach außen hervortreten und die aufgeschobene Kugel 4 sicher fixieren. Es hat sich dabei bewährt, dass die Ringnuten durch einen Rollprozess eingebracht werden. Hierdurch ergibt sich ein günstiger Faserverlauf im Material des Trägerabschnitts, so dass die Spitzen zwischen den Ringnuten beim Aufschieben der Kugel 4 fest sind und sich keine Späne bilden.

Der Zapfengrundkörper 2 hat an seinem von der Kugel 4 entfernten Ende einen zylindrischen Abschnitt 11, in den ein Gewinde 12 eingearbeitet ist. Sehr bevorzugt ist, dass sowohl die Ringnuten 6, 6', 6", 6"' und 6"" als auch das Gewinde 12 in einem gemeinsamen Fertigungsprozess durch Einrollen hergestellt werden, was sich in sehr ökonomischer Weise durchführen lässt.

Die Ringnuten 6, 6', 6", 6'" und 6"" haben bevorzugt eine Form, wie sie in der vergrößerten Darstellung gemäß Fig. 3 zu sehen ist. Demgemäß haben die Ringnuten eine im Radialschnitt dreieckförmige Kontur, wobei ein Flankenwinkel α zur Längsrichtung L von ca. 60° bevorzugt ist. Für die Tiefe t der Ringnuten hat sich ein Wert zwischen 0,4 und 2,0 mm bewährt. Der axiale Abstand a zwischen zwei Ringnuten liegt zumeist zwischen 1,25 und 2,5 mm.

Der dargestellte Kugelzapfen ist vorliegend Bestandteil eines Kugelgelenks, das für ein Koppelelement eingesetzt wird, um zwei (nicht dargestellte) Teile eines Fahrwerks eines Kraftfahrzeugs relativ zueinander festzulegen, um so Wege und Kräfte des einen Fahrwerkteils auf das andere übertragen zu können.

### Bezugszeichenliste:

- 1: Kugelzapfen
- 2: Zapfengrundkörper
- 3: Durchgangsbohrung
- 4: Kugel
- 5: Trägerabschnitt
- 6: Ringnut
- 6': Ringnut
- 6": Ringnut
- 6"': Ringnut
- 6"": Ringnut
- 7: Flansch
- 8: Sitzfläche
- 9: Ring
- 10: Ringnut
- 11: zylindrischer Abschnitt
- 12: Gewinde
- 13: Innenbohrung

- L: Längsrichtung
- α: Flankenwinkel
- t: Tiefe
- a: Abstand

## Patentansprüche

1. Kugelgelenk-Kugelzapfen (1), der einen sich in eine Längsrichtung (L) erstreckenden Zapfengrundkörper (2) aufweist, an dessen einem Ende eine mit einer Durchgangsbohrung (3) versehene Kugel (4) auf einen zylindrischen Trägerabschnitt (5) des Zapfengrundkörpers (2) in Längsrichtung (L) aufgeschoben ist, wobei der Trägerabschnitt (5) mit mindestens einer um den Umfang des Trägerabschnitts (5) umlaufenden Ringnut (6, 6', 6", 6"', 6"") versehen ist,
**dadurch gekennzeichnet, dass**
der Zapfengrundkörper (2) einen sich radial nach außen erstreckenden Flansch (7) aufweist, an den sich eine zylindrische Sitzfläche (8) mit geringerem Durchmesser als der Außendurchmesser des Flansches (7) anschließt, wobei auf der Sitzfläche (8) ein Ring (9) mit Presspassung sitzt, wobei der Ring (9) zwischen der Kugel (4) und dem Flansch (7) angeordnet ist und wobei zwischen dem Flansch (7) und dem Ring (9) eine um den Umfang des Zapfengrundkörpers (2) herum verlaufende Ringnut (10) ausgebildet ist.

2. Kugelgelenk-Kugelzapfen nach Anspruch 1, **dadurch gekennzeichnet, dass** auf dem Trägerabschnitt (5) mehrere axial nebeneinander angeordnete Ringnuten (6, 6', 6", 6"', 6"") angeordnet sind.

3. Kugelgelenk-Kugelzapfen nach Anspruch 1 oder 2, **dadurch gekennzeichnet, dass** die Ringnuten (6, 6', 6", 6"', 6"") durch einen Rollprozess eingebracht sind.

4. Kugelgelenk-Kugelzapfen nach einem der Ansprüche 1 bis 3, **dadurch gekennzeichnet, dass** die mindestens eine Ringnut (6, 6', 6", 6"', 6"") im Radialschnitt eine dreieckförmige Kontur aufweist.

5. Kugelgelenk-Kugelzapfen nach Anspruch 4, **dadurch gekennzeichnet, dass** der Flankenwinkel (α) der dreieckförmigen Kontur zur Längsrichtung (L) zwischen 45° und 75° beträgt.

6. Kugelgelenk-kugelzapfen nach einem der Ansprüche 1 bis 5, **dadurch gekennzeichnet, dass** die radiale Tiefe (t) der Ringnut (6, 6', 6", 6'", 6"") zwischen 0,4 mm und 2,0 mm beträgt, vorzugsweise zwischen 0,7 mm und 1,4 mm.

7. Kugelgelenk-Kugelzapfen nach einem der Ansprüche 2 bis 6, **dadurch gekennzeichnet, dass** der axiale Abstand (a) zweier Ringnuten (6, 6', 6", 6'", 6"") zwischen 1,0 mm und 3,0 mm beträgt, vorzugsweise zwischen 1,25 mm und 2,5 mm.

8. Kugelgelenk-Kugelzapfen nach einem der Ansprüche 1 bis 7, **dadurch gekennzeichnet, dass** der Zapfengrundkörper (2) im Zustand, in dem die Kugel (4) auf den Trägerabschnitts (5) aufgeschoben ist, frei von einer Umbördelung ist.

9. Kugelgelenk-Kugelzapfen nach einem der Ansprüche 1 bis 8, **dadurch gekennzeichnet, dass** der Ring (9) im Radialschnitt eine rechteckförmige oder quadratische Form aufweist.

10. Kugelgelenk-Kugelzapfen nach einem der Ansprüche 1 bis 9, **dadurch gekennzeichnet, dass** der Zapfengrundkörper (2) aus einem kaltfließgepressten Körper besteht.

11. Kugelgelenk-Kugelzapfen nach einem der Ansprüche 1 bis 10, **dadurch gekennzeichnet, dass** der Zapfengrundkörper (2) an dem von der Kugel (4) entfernten Ende einen zylindrischen Abschnitt (11) aufweist, in den ein Gewinde (12) eingearbeitet ist.

12. Kugelgelenk-Kugelzapfen nach Anspruch 11, **dadurch gekennzeichnet, dass** das Gewinde (12) durch einen Rollprozess eingebracht ist.

13. Kugelgelenk-Kugelzapfen nach einem der Ansprüche 1 bis 12, **dadurch gekennzeichnet, dass** er Bestandteil des Kugelgelenk einer Pendelstütze eines Kraftfahrzeugs ist.

## Claims

1. Ball joint journal (1), which comprises a journal base body (2) extending in a longitudinal direction (L), wherein at one of its ends a ball (4) having a through hole (3) is inserted on a cylindrical carrier section (5) of the journal base body (2) in longitudinal direction (L), wherein the carrier section (5) is provided with at least one ring groove (6, 6', 6", 6"', 6"") running around the circumference of the carrier section (5),
**characterized in**
**that** journal base body (2) comprises a flange (7) extending in radial outer direction, at which a cylindrical seat (8) adjoins having a smaller diameter than the outer diameter of the flange (7), wherein a ring (9) is arranged on the seat (8) with interference fit, wherein the ring (9) is arranged between the ball (4) and the flange (7), and wherein a ring groove (10) running around the circumference of the journal base body (2) is established between the flange (7) and the ring (9).

2. Ball joint journal according to claim 1, **characterized in that** several ring grooves (6, 6', 6", 6"', 6"") being located axially side by side are arranged on the carrier section (5).

3. Ball joint journal according to claim 1 or 2, **characterized in that** the ring grooves (6, 6', 6", 6"', 6"") are machined by a rolling process.

4. Ball joint journal according to one of claims 1 to 3, **characterized in that** the at least ring groove (6, 6', 6", 6"', 6"'") has a triangular shape in a radial cross section.

5. Ball joint journal according to one claim 4, **characterized in that** the flank angle (α) of the triangular shape to the longitudinal direction (L) is between 45° and 75°.

6. Ball joint journal according to one of claims 1 to 5, **characterized in that** the radial depth (t) of the ring groove (6, 6', 6", 6"', 6"") is between 0.4 mm and 2.0 mm, preferably between 0.7 mm and 1.4 mm.

7. Ball joint journal according to one of claims 2 to 6, **characterized in that** axial distance (a) of two ring grooves (6, 6', 6", 6"', 6"") is between 1.0 mm and 3.0 mm, preferably between 1.25 mm and 2.5 mm.

8. Ball joint journal according to one of claims 1 to 7, **characterized in that** the journal base body (2) is free from any flanging in the state in which the ball (4) is inserted on the carrier section (5).

9. Ball joint journal according to one of claims 1 to 8, **characterized in that** the ring (9) has a rectangular or quadratic shape in a radial cross section.

10. Ball joint journal according to one of claims 1 to 9, **characterized in that** the journal base body (2) consists of a cold extruded body.

11. Ball joint journal according to one of claims 1 to 10, **characterized in that** the journal base body (2) comprises a cylindrical section (11) at its end which is remote form the ball (4), in which cylindrical section (11) a thread (12) is machined.

12. Ball joint journal according to claim 11, **characterized in that** the thread (12) is machined by a rolling process.

13. Ball joint journal according to one of claims 1 to 12, **characterized in that** it is part of a ball joint of a stabilizer link of a motor vehicle.

## Revendications

1. Pivot à rotule (1) d'une articulation à rotule, qui comprend un corps de base de pivot (2) s'étendant dans une direction longitudinale (L), à une extrémité duquel une rotule (4) pourvue d'un alésage traversant (3) est enfilée dans la direction longitudinale (L) sur une section de support cylindrique (5) du corps de base de pivot (2), la section de support (5) étant pourvue d'au moins une rainure annulaire (6, 6', 6", 6"', 6"") s'étendant sur le pourtour de la section de support (5),
**caractérisé en ce que**
le corps de base de pivot (2) comprend un rebord (7) s'étendant radialement vers l'extérieur, auquel se raccorde une surface d'appui cylindrique (8) de plus petit diamètre que le diamètre extérieur du rebord (7), un anneau (9) reposant sur la surface d'appui (8) avec ajustement serré, l'anneau (9) étant disposé entre la rotule (4) et le rebord (7) et une rainure annulaire (10) s'étendant sur le pourtour du corps de base de pivot (2) étant réalisée entre le rebord (7) et l'anneau (9).

2. Pivot à rotule d'une articulation à rotule selon la revendication 1, **caractérisé en ce que** plusieurs rainures annulaires juxtaposées axialement (6, 6', 6", 6"', 6"") sont disposées sur la section de support (5).

3. Pivot à rotule d'une articulation à rotule selon la revendication 1 ou 2, **caractérisé en ce que** les rainures annulaires (6, 6', 6", 6"', 6"") sont ménagées par un processus de roulage.

4. Pivot à rotule d'une articulation à rotule selon l'une quelconque des revendications 1 à 3, **caractérisé en ce que** l'au moins une rainure annulaire (6, 6', 6", 6"', 6"") présente un contour triangulaire en coupe radiale.

5. Pivot à rotule d'une articulation à rotule selon la revendication 4, **caractérisé en ce que** l'angle de flanc (α) du contour triangulaire par rapport à la direction longitudinale (L) vaut entre 45° et 75°.

6. Pivot à rotule d'une articulation à rotule selon l'une quelconque des revendications 1 à 5, **caractérisé en ce que** la profondeur radiale (t) de la rainure annulaire (6, 6', 6", 6"', 6"") vaut entre 0,4 mm et 2,0 mm, de préférence entre 0,7 mm et 1,4 mm.

7. Pivot à rotule d'une articulation à rotule selon l'une quelconque des revendications 2 à 6, **caractérisé en ce que** l'espacement axial (a) de deux rainures annulaires (6, 6', 6", 6"', 6"") vaut entre 1,0 mm et 3,0 mm, de préférence entre 1,25 mm et 2,5 mm.

8. Pivot à rotule d'une articulation à rotule selon l'une quelconque des revendications 1 à 7, **caractérisé en ce que** le corps de base de pivot (2) est exempt de bord rabattu dans l'état dans lequel la rotule (4) est enfilée sur la section de support (5).

9. Pivot à rotule d'une articulation à rotule selon l'une quelconque des revendications 1 à 8, **caractérisé en ce que** l'anneau (9) présente en coupe radiale une forme rectangulaire ou quadratique.

10. Pivot à rotule d'une articulation à rotule selon l'une quelconque des revendications 1 à 9, **caractérisé en ce que** le corps de base de pivot (2) est constitué d'un corps extrudé à froid.

11. Pivot à rotule d'une articulation à rotule selon l'une quelconque des revendications 1 à 10, **caractérisé en ce que** le corps de base de pivot (2) présente, à l'extrémité éloignée de la rotule (4), une section cylindrique (11) dans laquelle est incorporé un filetage (12).

12. Pivot à rotule d'une articulation à rotule selon la revendication 11, **caractérisé en ce que** le filetage (12) est ménagé au moyen d'un processus de roulage.

13. Pivot à rotule d'une articulation à rotule selon l'une quelconque des revendications 1 à 12, **caractérisé en ce qu'**il fait partie de l'articulation à rotule d'un support oscillant d'un véhicule automobile.
